# EUROPÄISCHE PATENTSCHRIFT

(11) **EP 0 304 836 B1**
(45) Veröffentlichungstag und Bekanntmachung des Hinweises auf die Patenterteilung: **15.12.1993**
(21) Anmeldenummer: 88113574.3
(22) Anmeldetag: 20.08.1988
(51) Int. Cl.: H04N 7/133

(54) **Verfahren und Schaltungsanordnung zur Verbesserung der Auflösung von digitalen Signalen**
Method and circuit concerning the resolution of digital signals
Procédé et circuit relatifs à la résolution de signaux numériques

(30) Priorität: 26.08.1987 DE 3728444
(43) Veröffentlichungstag der Anmeldung: 01.03.1989
(73) Patentinhaber: Deutsche Thomson-Brandt GmbH, 78003 Villingen-Schwenningen (DE)
(72) Erfinder: Hartnack, Wolfgang, Dipl.-Ing., D-3005 Hemmingen 1 (DE); Keesen, Heinz-Werner, Dr.-Ing., D-3000 Hannover 1 (DE); Schütze, Herbert, Dipl.-Ing., D-3000 Hannover (DE)

(56) Entgegenhaltungen:
- DE-A- 3 045 542
- US-A- 4 394 774
- US-A- 4 463 377

## Beschreibung

Die Erfindung betrifft ein Verfahren zur Verbesserung der Auflösung von digitalen Signalen nach dem Oberbegriff des Patentanspruchs 1.

Um bei der digitialen Übertragung von Fernseh-Signalen den Datenumfang zu reduzieren, ist es bekannt, die Fernseh-Signale vom Originalbereichbereich blockweise zunächst in einen Frequenzbereich zu transformieren, von den aufgrund der Transformation erhaltenen Spektralkoeffizienten nur die wesentlichen Koeffizienten zu übertragen und die unwesentlichen zu Null zu setzen und anschließend die transformierten Werte wieder in den Originalbereich zurückzutransformieren. Die Transformation erfolgt durch Multiplikation der Signalwerte mit einer Transformationsfunktion, wobei die Stellenzahl infolge der Transformation zunimmt. Um die Stellenzahl auf den für eine ausreichende Auflösung der Abstufungen der Luminanz- und/oder Chrominanz-Signalwerte festgelegten Wert, z.B. 8 Bit plus Vorzeichen zu reduzieren, wird z.B. bei einer zweidimensionalen Transformation der Blockgröße 8*8 eine zweimalige Integer-Division der Koeffizienten-Blöcke und damit eine Rundung der Transformationswerte vorgenommen.

Es hat sich gezeigt, daß bei kleinen Wechselanteilen der transformierten Koeffizienten, d.h. bei sanften Strukturen im Originalbild, gröbere Strukturen nach der Rücktransformation auftreten. Dies liegt daran, daß durch die Rundung der transformierten Werte Informationen verlorengehen, die bei der Rücktransformation fehlen und aufgrund nicht vorhandenen Maskierung durch höherfrequente Signalanteile störend sichtbar werden.

Der Erfindung liegt die Aufgabe zugrunde, bei Begrenzung der Stellenzahl im Frequenzbereich eine bessere Reproduktion kleinerer Signalveränderungen im Originalbereich nach der Rücktransformation zu erhalten.

Diese Aufgabe wird bei einem Verfahren nach dem Oberbegriff des Anspruchs 1 durch die im kennzeichnenden Teil angegebenen Merkmale gelöst.

Die nach der Transformation der Abtastwerte errechneten Koeffizienten für den Gleichanteil einerseits und die Wechselanteile andererseits belegen unterschiedliche Zahlenbereiche. Der Gleichanteil umfaßt nur positive Werte, die Wechselanteile umfassen positive und negative Werte, wobei jedoch ihr Betrag höchstens halb so groß sein kann wie der des Gleichanteils. Somit ist die Spanne zwischen dem kleinsten und dem größten möglichen Wert beim Gleichanteil und bei den Wechselanteilen gleich. Dieser Umstand wird bei der Erfindung ausgenutzt, um durch Verschieben eines der Zahlenbereiche einheitliche Bereiche für die Werte des Gleichanteils und der Wechselanteile zu schaffen. Hierdurch konnen die zur Verfügung stehenden Stellen der Datenworte optimal für die Quantisierung der Koeffizienten ausgenutzt werden.

Die Erfindung betrifft ferner eine Schaltungsanordnung zur Verbesserung der Auflösung von Fernseh-Signalen nach dem Oberbegriff des Anspruchs 4.

Diesbezüglich liegt die Aufgabe zugrunde, eine Schaltungsanordnung zu schaffen, welche bei Begrenzung der Stellenzahl im Frequenzbereich eine bessere Reproduktion kleinerer Signalveränderungen im Originalbereich nach der Rücktransformation ermöglicht.

Diese Aufgabe wird bei einer Schaltungsanordnung nach dem Oberbegriff des Anspruchs 4 durch die im Kennzeichen angegebenen Merkmale gelöst.

Weiterbildungen und vorteilhafte Ausführungsformen der Erfindung ergeben sich aus den weiteren Ansprüchen, der Beschreibung und der Zeichnung, anhand der ein Ausführungsbeispiel der Erfindung nachfolgend erläutert wird.

In der Zeichnung zeigen:
- Fig. 1: eine Schaltungsanordnung zur Transformation von digitalen Signalen aus dem Originalbereich in einen Frequenzbereich mit einer Begrenzung der Stellenzahl und einer sich daran anschließenden Rücktransformation in den Originalbereich;
- Fig. 2: eine Schaltungsanordnung entsprechend Fig. 1, jedoch mit zusätzlichen Bereichsverschiebeschaltungen.

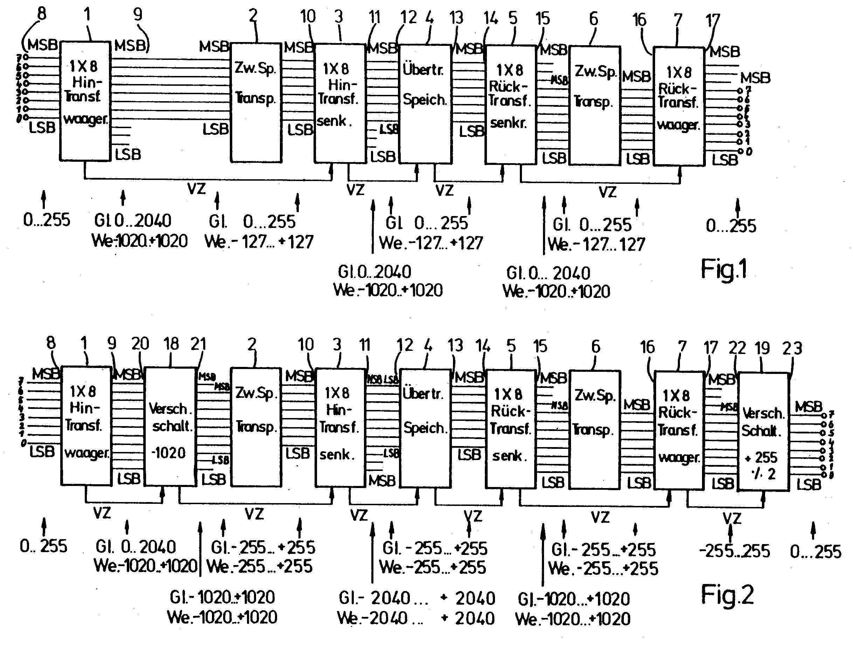

Die in Fig. 1 dargestellte Transformationsschaltung eignet sich zur Verarbeitung von Fersehsignalen, bei denen das Fernsehbild in quadratische Blöcke von 8*8 Pixel zerlegt ist und die den Luminanz- und/oder Chrominanzwerten entsprechenden Abtastwerten mit einer Quantisierung von 256 Quantisierungsstufen als achtstellige Datenworte zur Verfügung stehen. Aufgrund der zweidimensionalen Ausdehnung der Blöcke wird eine zweidimensionale Transformation vorgenommen, wobei zunächst eine waagerechte erste Dimension und anschließend eine senkrechte zweite Dimension transformiert wird.

Zur Durchführung dieser Transformation umfaßt die Schaltungsanordnung eine erste Transformationsschaltung 1, eine Zwischenspeicher- und Transponierschaltung 2, eine zweite Transformationsschaltung 3 und hinter einer Übertragungsstrecke 4 oder einem Massenspeicher eine Schaltung zur Rücktransformation, bestehend aus einer dritten Transformationsschaltung 5, einer zweiten Zwischenspeicher- und Transponierschaltung 6 und einer vierten Transformationsschaltung 7. Die vier Transformationsschaltungen 1, 3, 5 und 7 können z.B. als Speicher ausgebildet sein, in dessen Speicherplätzen alle vorkommenden, mit der Transformationsfunktion errechneten transformierten Werten enthalten sind und bei Adressierung ihre Eingänge auf die Ausgänge gelegt werden. Die Zwischenspeicher- und Transponierschaltungen 2, 6 können als Speicher ausgebildet sein, bei denen die Reihenfolge der gespeicherten Werte derart umgruppiert wird, daß die zuvor in den Zeilen stehenden Werte nun in die Spalten und umgekehrt umgesetzt werden. Die die Koeffizienten bildende Matrix wird also um 90° gedreht.

Unterhalb der Funktionsblöcke ist jeweils der Wertebereich im dekadischen Zahlensystem angegeben, den die Abtastwerte bzw. nach der Transformation die Gleichanteile und Wechselanteile der transformierten Koeffizienten einnehmen.

Die am Eingang 8 anstehenden Abtastwerte belegen einen Wertebereich von 0 bis 255. Unter der Voraussetzung, daß acht Pixel einer 8*8 Matrix bei der ersten Dimension transformiert werden, nimmt die Stellenzahl am Ausgang 9 der Transformationsschaltung 1 um den Faktor acht zu. Somit umfaßt am Ausgang 9 der Wertebereich beim Gleichanteil die Zahlenwerte von 0 bis 2.040 und bei den Wechselanteilen von -1.020 bis +1.020. Durch Nichtberücksichtigung der drei Stellen geringster Wertigkeit (LSB) erfolgt eine Division der Koeffizienten durch acht. Diese Stellenzahl liegt auch den Werten am Eingang 10 der zweiten Transformationsschaltung 3 zugrunde, worauf die transformierten Koeffizienten am Ausgang 11 wiederum um den Faktor acht vergrößert werden und durch Nichtberücksichtigung der drei Stellen geringster Wertigkeit (LSB) auf den bereits erwähnten Bereich des Gleichanteils und des Wechselanteils beschränkt werden.

Damit stehen am Eingang 12 einer Übertragunsstrecke 4 oder eines Massenspeichers für den Gleichanteil zwar Werte mit 256 Abstufungen zur Verfügung, bei den Wechselanteilen sind es jedoch nur 128 Abstufungen. Die Werte für die Wechselanteile sind also gröber quantisiert und evtl. Quantisierungsfehler machen sich bei der Widergabe dadurch störend bemerkbar, daß bei allmählichen Helligkeits- oder Farbübergängen Treppenstrukturen sichtbar werden.

Nach der Speicherung und Übertragung werden die am Ausgang 13 vorhandenen transformierten Werte wieder in den Bildbereich zurücktransformiert, und zwar in umgekehrter Weise wie bei der Hintransformation. Die Rücktransformation erfolgt zunächst eindimensional bei den Spalten. Aus den am Eingang 14 anliegenden Datenworten werden nach der Rücktransformation am Ausgang 15 Datenworte errechnet, deren Wertebereich, bei den Gleichanteilen und bei den Wechselanteilen jeweils zwischen -1.020 und +1.020 liegt, wobei der tatsächlich belegte Wertebereich aber nur von +255 und -255 reicht, da die höheren Binärstellen gleich Null sind. Die drei höchstwertigen Stellen (MSB) brauchen daher nicht berücksichtigt zu werden. Von dem genannten Wertebereich belegt ein Gleichanteil zwischen 0 und 255 und Wechselanteile zwischen -127 und +127. Datenworte dieses Wertebereichs gelangen, nachdem in der Zwischenspeicher- und Transponierschaltung 6 die Zeilen und Spalten vertauscht wurden, an den Eingang 16 der vierten Transformationsschaltung 7. Nach Rücktransformation erscheinen am Ausgang 17 der vierten Transformationsschaltung 7 wieder Datenworte, von denen die höchstwertigenStellen (MSB) nicht berücksichtigt werden. Der Wertebereich der Abtastwerte beträgt wieder zwischen 0 und 255.

Bei der Schaltungsanordnung in Fig. 2, die ähnlich wie Fig. 1 aufgebaut ist, sind zusätzlich Bereichsverschiebeschaltungen 18 und 19 angeordnet, die z.B. als Additionsschaltungen eines variablen Wertes mit einem konstanten Wert ausgebildet sein können. Bei der Verarbeitung des Gleichanteils in der noch unbegrenzten Stellenzahl wird der betreffende am Eingang 20 anliegende Wert des Gleichanteils mit der Hälfte seines max. Zahlenbereichs, bei 2.040 also mit 1.020 subtrahiert, sodaß der neue Wertebereich am Ausgang 21 nun zwischen -1.020 und +1.020 zu liegen kommt. Damit deckt sich der Wertebereich des Gleichanteils mit dem des Wechselanteils. Statt der Division durch acht durch Weglassen der drei Stellen niedrigster Wertigkeit (LSB) wird hier nur eine Division durch vier vorgenommen. Der nunmehr mögliche negative Zahlenbereich des Gleichanteils wird in gleicher Weise wie bei den Wechselanteilen durch ein Vorzeichen gekennzeichnet.

Diese Maßnahme kommt den Wechselanteilen zugute, die nun mit einer Auflösung von -255 bis +255 in der Transformationsschaltung 3 verarbeitet werden können. In den folgenden Stufen entspricht die weitere Hintransformation und die Rücktransformation derjenigen aus Fig. 1. Nach der Rücktransformation der zweiten Dimension ist allerdings erforderlich, den ursprünglichen Bereich wieder herzustellen. Dies geschieht durch die weitere Bereichsverschiebeschaltung 19, in der zu den am Eingang 22 anliegenden Datenworten der Zahlenwert 255 addiert und das Ergebnis durch zwei dividiert wird. Am Ausgang 23 ist dann ein Datenwort abgreifbar, dessen Wertebereich von 0 bis 255 reicht. Mit der beschriebenen Maßnahme wird ohne Erhöhung der Stellenzahl erreicht, daß die Wechselanteile mit einer um den Faktor zwei höheren Auflösung gespeichert oder übertragen werden können. Dies führt bei der Reproduktion der Werte im Originalbereich zu einer weniger auffälligen Abstufung der Luminanz- und Chrominanzwerte.

## Patentansprüche

1. Verfahren zur Verbesserung der Auflösung von digitalen Signalen, insbesondere Luminanz- und/oder Chrominanz-Fernseh-Signalen, deren Abtastwerte - z.B. durch diskrete Cosinus-Transformation - blockweise transformiert (1, 3) werden, so daß für jeden zweidimensionalen Block ein einen Gleichanteil (Gl) darstellender, positiver Koeffizient und mehrere Wechselanteile (We) darstellende, negative oder positive Koeffizienten entstehen, und bei dem bei der Berechnung der Koeffizienten die zum Darstellen der Koeffizienten erforderliche Stellenzahl begrentz wird und bei dem die so erhaltenen Koeffizienten nach einer Übertragung und/oder Speicherung (4) wieder rücktransformiert (5, 7) werden, **dadurch gekennzeichnet**, daß für die Blöcke jeweils eine aus zwei eindimensionalen Transformationen bestehende zweidimensionale Transformation erfolgt, wobei zwischen der ersten (1) und zweiten (3) eindimensionalen Transformation die Zahlenwerte der den Gleichanteil darstellenden Koeffizienten in den Zahlenbereich, den die die Wechselanteile darstellenden Koeffizienten belegen, verschoben (18) einem entsprechenden Vorzeichen (VZ) versehen werden und wobei nach Abschluß der Rücktransformation die Zahlenwerte der Blöcke in den ursprünglichen Zahlenbereich rücküberführt (19) werden.

2. Verfahren nach Anspruch 1, **dadurch gekennzeichnet**, daß zur Verschiebung (18) der Zahlenwerte der Gleichanteile von jedem Gleichanteil ein solcher Wert subtrahiert wird, der der Hälfte des den Gleichanteilen zur Verfügung stehenden Zahlenbereichs nach der ersten Transformation (MSB...LSB an 20) entspricht.

3. Verfahren nach Anspruch 1 oder 2, **dadurch gekennzeichnet**, daß zur Rücküberführung (19) zu jedem der Zahlenwerte der Blöcke ein solcher Wert addiert wird, der der Hälfte des den Zahlenwerten nach der abgeschlossenen Rücktransformation zur Verfügung stehenden Zahlenbereichs entspricht.

4. Schaltungsanordnung zur Verbesserung der Auflösung von digitalen Signalen, insbesondere Luminanz- und/oder Chrominanz-Fernseh-Signalen, deren Abtastwerte - z.B. durch diskrete Cosinus-Transformation - mittels einer Transformationsschaltung (1, 3) blockweise transformiert werden, so daß für jeden zweidimensionalen Block ein einen Gleichanteil (Gl) darstellender, positiver Koeffizient und mehrere Wechselanteile (We) darstellende, negative oder positive Koeffizienten entstehen, und in der bei der Berechnung der Koeffizienten die zum Darstellen der Koeffizienten erforderliche Stellenzahl begrenzt wird oder die entsprechend transformierte Koeffizienten mittels einer Rück-Transformationsschaltung (5, 7) wieder rücktransformiert, **gekennzeichnet** durch den folgenden Transformations-Teil:
- eine erste eindimensionale Transformations-Schaltung (1) für die digitalen Signale;
- eine der ersten eindimensionalen Transformations-Schaltung nachgeordnete erste Bereichsverschiebeschaltung (18), die die Zahlenwerte der den Gleichanteil darstellenden Koeffizienten in den Zahlenbereich, den die die Wechselanteile darstellenden Koeffizienten belegen, verschiebt;
- eine zweite eindimensionale Transformations-Schaltung (3), die der ersten Bereichsverschiebeschaltung nachgeordnet ist und die zweidimensional transformierte Blöcke von Koeffizienten abgibt,
und durch den folgenden Rücktransformations-Teil:
- eine erste eindimensionale Rücktransformations-Schaltung (5), der eine zweite eindimensionale Rücktransformations-Schaltung (7) nachgeordnet ist;
- eine zweite Bereichsverschiebeschaltung (19), die nach Abschluß der Rücktransformation die Zahlenwerte der Blöcke in den ursprünglichen Zahlenbereich rücküberführt.

5. Schaltungsanordnung nach Anspruch 4, **dadurch gekennzeichnet**, daß die erste Bereichsverschiebeschaltung (18) von jedem Gleichanteil einen solchen Wert subtrahiert, der der Hälfte des den Gleichanteilen zur Verfügung stehenden Zahlenbereichs nach der ersten Transformation (MSB...LSB an 20) entspricht.

6. Schaltungsanordnung nach Anspruch 4 oder 5, **dadurch gekennzeichnet**, daß die zweite Bereichsverschiebeschaltung (19) zu jedem der Zahlenwerte der Blöcke einen solchen Wert addiert, der der Hälfte des den Zahlenwerten am Ausgang (17) der zweiten Rücktransformations-Schaltung zur Verfügung stehenden Zahlenbereichs entspricht.

## Claims

1. Method for improving the resolution of digital signals, in particular luminance and/or chrominance television signals, whose sampling values are transformed (1, 3) as blocks e.g. by discrete cosine transformation so that a positive coefficient representing a dc component (G1) and a plurality of negative or positive coefficients representing ac components (We) occur for each two dimensional block and in which the number of places required for the representation of the coefficients is limited when calculating the coefficients and in which the thus obtained coefficients are inversely transformed (5, 7) after a transmission and/or storage (4), characterised in that, a two dimensional transformation consisting of two unidimensional transformations occurs for each of the blocks, wherein, between the first (1) and second (2) unidimensional transformations, the numerical values of the coefficients representing the dc component are displaced (18) into the numerical range which the coefficients representing the ac components occupy and are provided with a corresponding sign (VZ) and wherein, after the conclusion of the inverse transformation, the numerical values of the blocks are transferred back (19) into the original numerical range.

2. Method in accordance with Claim 1, characterised in that, for the displacement (18) of the numerical values of the dc components, a value is subtracted from each dc component which is such as corresponds to the half of the numerical range available to the dc components after the first transformation (MSB...LSB to 20).

3. Method in accordance with Claim 1 or 2, characterised in that, for the reverse transfer (19), a value is added to each of the numerical values of the blocks which is such as corresponds to the half of the numerical range available to the numerical values after the concluded inverse transformation.

4. Circuit arrangement for improving the resolution of digital signals, in particular luminance and/or chrominance television signals, whose sampling values are transformed as blocks e.g. by discrete cosine transformation, by means of a transformation circuit (1, 3) so that a positive coefficient representing a dc component (G1) and a plurality of negative or positive coefficients representing ac components (We) occur for each two dimensional block and in which the number of places required for the representation of the coefficients is limited when calculating the coefficients or the correspondingly transformed coefficients are inversely transformed by means of an inverse transformation circuit (5, 7), characterised by the following transformation section:
- a first unidimensional transformation circuit (1) for the digital signals;
- a first range displacement circuit (18), which displaces the numerical values of the coefficients representing the dc component into the numerical range which the coefficients representing the ac components occupy, located after the first unidimensional transformation circuit;
- a second unidimensional transformation circuit (3) which is located after the first range displacement circuit and emits the two dimensional transformed blocks of coefficients,
and by the following inverse transformation section:
- a first unidimensional inverse transformation circuit (5) following which there is located a second unidimensional inverse transformation circuit (7);
- a second range displacement circuit (19) which transfers the numerical values of the blocks back into the original numerical range after the conclusion of the inverse transformation.

5. Circuit arrangement in accordance with Claim 4, characterised in that, the first range displacement circuit (18) subtracts a value from each dc component which is such as corresponds to the half of the numerical range available to the dc components after the first transformation (MSB...LSB to 20).

6. Circuit arrangement in accordance with Claim 4 or 5, characterised in that, the second range displacement circuit (19) adds a value to each of the numerical values of the blocks which is such as corresponds to the half of the numerical range available to the numerical values at the output (17) of the second inverse transformation circuit.

## Revendications

1. Procédé pour améliorer la résolution de signaux numériques, en particulier de signaux de télévision de luminance et/ou de chrominance dont les valeurs de balayage sont transformées (1, 3) bloc par bloc, par exemple par une transformation à cosinus à valeurs discrètes, si bien qu'un coefficient positif, qui représente une fraction continue (G1) et plusieurs coefficients négatifs ou positifs, qui représentent plusieurs fractions alternatives (We) se forment pour chaque bloc bidimensionnel et dans lequel, lors du calcul des coefficients, le nombre de chiffres nécessaire pour la représentation des coefficients est limité et dans lequel les coefficients ainsi obtenus sont retransformés (5, 7) après une transmission et/ou mise en mémoire (4), **caractérisé en ce** qu'une transformation bidimensionnelle, qui se compose de deux transformations unidimensionnelles, est effectuée pour les blocs, les valeurs numériques des coefficients qui représentent la fraction continue étant, entre la première (1) et la seconde (3) transformation unidimensionnelle, décalées (18) dans la gamme des chiffres qu'occupent les coefficients qui représentent les fractions alternatives et sont pourvues d'un signe correspondant (VZ), les valeurs numériques des blocs étant retransmises (19) dans la gamme de chiffres d'origine après achèvement de la transformation inverse.

2. Procédé selon la revendication 1, **caractérisé en ce** que pour le décalage (18) des valeurs numériques des fractions continues une valeur est soustraite de chaque fraction continue, valeur qui correspond à la moitié de la gamme de chiffres qui est disponible pour les fractions continues après la première transformation (MSB...LSB à 20).

3. Procédé selon la revendication 1 ou 2, **caractérisé en ce** que, pour la retransmission (19) une valeur est ajoutée à chacune des valeurs numériques des blocs, valeur qui correspond à la moitié de la gamme de chiffres qui est disponible pour les valeurs numériques après achèvement de la transformation inverse.

4. Circuit pour améliorer la résolution de signaux numériques, en particulier de signaux de télévision de luminance et/ou de chrominance dont les valeurs de balayage sont transformées bloc par bloc, par exemple par une transformation à cosinus à valeurs discrètes, au moyen d'un circuit de transformation (1, 3) si bien qu'un coefficient positif, qui représente une fraction continue (G1) et plusieurs coefficients négatifs ou positifs, qui représentent plusieurs fractions alternatives (We) se forment pour chaque bloc bidimensionnel et dans lequel, lors du calcul des coefficients, le nombre de chiffres nécessaire pour la représentation des coefficients est limité ou les coefficients transformés de manière correspondante sont retransformés au moyen d'un circuit de retransformation (5, 7), **caractérisé** par la partie de transformation suivante :
- un premier circuit de transformation unidimensionnel (1) pour les signaux numériques ;
- un premier circuit de translation de gamme (18), placé après le premier circuit unidimensionnel de transformation, qui décale les valeurs numériques des coefficients qui représentent la fraction continue dans la gamme des chiffres qu'occupent les coefficients qui représentent les fractions alternatives ;
- un second circuit de transformation unidimensionnel (3) qui est placé après le premier circuit de translation de gamme et qui donne les blocs de coefficients transformés de manière bidimensionnelle,
et par la partie de transformation inverse suivante :
- un premier circuit de transformation inverse unidimensionnel (5) après lequel est placé un second circuit de transformation inverse unidimensionnel (7) ;
- un second circuit de translation de gamme (19) qui, après achèvement de la transformation inverse, retransmet les valeurs numériques des blocs dans la gamme de chiffres d'origine.

5. Circuit selon la revendication, **caractérisé en ce** que le premier circuit de translation de gamme (18) soustrait une valeur de chaque fraction continue, valeur qui correspond à la moitié de la gamme de chiffres qui est disponible pour les fractions continues après la première transformation (MSB...LSB à 20).

6. Circuit selon la revendication 4 ou 5, **caractérisé en ce** que le second circuit de translation de gamme (19) ajoute une valeur à chacune des valeurs numériques des blocs, valeur qui correspond à la moitié de la gamme de chiffres qui est disponible pour les valeurs numériques à la sortie (17) du second circuit de transformation inverse.
